# EUROPEAN PATENT SPECIFICATION

(11) **EP 2 754 871 B1**
(45) Date of publication and mention of the grant of the patent: **15.11.2017**
(21) Application number: 13151286.5
(22) Date of filing: 15.01.2013
(51) Int. Cl.: F01N 3/20, B01D 53/94

(54) **Method for controlling the operation of an exhaust aftertreatment system in a vehicle**
Verfahren zur Steuerung des Betriebes eines Abgasnachbehandlungssystems in einem Fahrzeug
Procédé pour commander le fonctionnement d'un système de post-traitement des gaz d'échappement d'un véhicule

(43) Date of publication of application: 16.07.2014
(73) Proprietor: Ford Global Technologies, LLC, Dearborn, MI 48126 (US)
(72) Inventor: Angst, Monika, 52062 Aachen (DE); Balenovic, Mario, 5582 AV Waalre (NL); Ukropec, Robert, 52134 Herzogenrath (DE)
(74) Representative: Illing, Rolf

(56) References cited:
- EP-A1- 2 210 788
- EP-A1- 2 256 311
- DE-A1-102004 001 331

## Description

The invention relates to a method for controlling the operation of an exhaust aftertreatment system in a vehicle, more particularly for controlling the operation of an exhaust aftertreatment system comprising a SCR catalyst for reducing nitrogen oxides in the exhaust gas of the engine based on a reaction between said nitrogen oxides and ammonia. Further, the invention relates to a vehicle configured to carry out the above mentioned method.

A known technology for reduction of undesired NOₓ in the exhaust gas of the engine of a vehicle is the so-called selective catalytic reduction (SCR), in which a reaction between the nitrogen oxides (NOₓ) and ammonia (NH₃) to nitrogen (N₂) and water (H₂O) is exploited in order to reduce the NOₓ in the exhaust gas to elemental nitrogen (N₂). The SCR technology typically involves - if the required ammonia (NH₃) cannot be delivered directly - the injection of an aqueous urea solution into the exhaust gas upstream of the SCR catalyst. Here, also the reaction of the aqueous urea solution to carbon dioxide (CO₂) and ammonia (NH₃) is exploited. The urea hydrolysis and decomposition to ammonia can take place in the gas phase as well as on the catalyst surface.

SCR catalysts can generally adsorb and store a certain amount of NH₃, the stored amount of ammonia depending on the catalyst formulation, catalyst size and temperature. In particular, the available storage level strongly depends on the temperature profile and is reduced with increasing temperatures, which e.g. occur during driving phases at high loads or during DPF regeneration.

In general, there is need to provide in such a SCR catalyst system a control system and strategy for ammonia/urea dosing in order to achieve and maintain an appropriate predefined storage level of ammonia (NH₃) in the SCR catalyst. By means of such a control system and strategy, as soon as the control system allows a refilling of the previously lowered storage level, the ammonia/urea dosing quantities are adjusted in order to rebuild the desired storage target.

A problem arising in practice is, however, that the afore-described process of refilling of the previously lowered storage level is disturbed or even interrupted e.g. when parking the vehicle or during longer periods of idle operation. However, the achievement of high NOₓ conversions as early as possible after e.g. an engine start-up is highly relevant in meeting stringent emission legislation targets.

DE 10 2009 008 165 A1 discloses a system for controlling urea injection quantity of a vehicle comprising, inter alia, a control portion that closes the dosing injector not to exhaust the urea solution that is charged in the urea supply line in case that operation of the engine is stopped and outside temperature is higher than a predetermined base temperature. The control portion stops the pump and opens the dosing injector to exhaust the urea solution charged in the urea supply line to the urea tank in case that operation of the engine is stopped and the outside temperature is equal to or lower than the predetermined base temperature.

EP 2 256 311 A1 discloses an exhaust gas purification device of an internal combustion engine, wherein, at the time the engine is stopped, a certain amount of urea is fed to the NOₓ selective reduction catalyst.

EP 2 210 788 A1 discloses an exhaust gas purification device for an internal combustion engine, whereby the engine is stopped with a large amount of ammonia adsorbed by an ammonia selective reduction-type NOₓ catalyst.

It is an object of the present invention to provide a method and a device for controlling the operation of an exhaust aftertreatment system comprising a SCR catalyst for reducing nitrogen oxides in the exhaust gas of the engine in a vehicle, which improves the SCR performance and enhances the reliability of the operation of the SCR catalyst.

That object is attained by the method in accordance with the features of the independent claim 1 and the vehicle in accordance with the features of claim 8.

According to the invention, a method for controlling the operation of an exhaust aftertreatment system in a vehicle, wherein said system comprises a SCR catalyst for reducing nitrogen oxides (NOₓ) in the exhaust gas of the engine based on a reaction between said nitrogen oxides (NOₓ) and ammonia (NH₃), and wherein a stored amount of ammonia (NH₃) being stored in said SCR catalyst is actively controlled by injection of ammonia (NH₃) or urea in a NH₃-refilling process, comprises the following steps:
- determining whether at least one indicator for an impending interruption of the NH₃-refilling process exists; and
- modifying, depending on the result of this step of determining, the NH₃-refilling process if said indicator exists.

The invention in particular involves the concept of increasing a prestored amount of ammonia (NH₃) in the SCR catalyst if a difference in the actual (assumed) and allowed NH₃ storage level is discovered and if the standard dosing control routine and, hence, the refilling of the SCR catalyst with NH₃, will be interrupted (e.g. if the engine is about to be switched off). Since the prestored ammonia is of high importance for the NOₓ conversion at lower temperatures and before the active control of the SCR system (i.e. the active injection of ammonia/urea) starts, the inventive strategy enables an improvement of the SCR performance at the next cold start due to an enhanced value of the stored amount of NH₃ that can be used until the dosing temperature, or the temperature that enables active injection of ammonia/urea, respectively, will be reached again. The prestored ammonia (NH₃) at the SCR catalyst will first be consumed after starting up the engine and improve NOₓ conversion before active dosing is again allowed.

In some embodiments of the invention, if an interruption of the active injection of urea/ammonia is forecasted, the dosing quantity is increased in order to faster compensate for the NH₃ storage difference in the SCR catalyst. In further embodiments, the exhaust aftertreatment system is kept active even for some more time after the vehicle stopped. In the latter case and with other words, the engine and the SCR system are not shut down immediately, but allow a time lag for continued urea/ammonia injection. As long as the SCR catalyst is still at high temperature, hydrolysis and decomposition of urea are still possible, and the storage of NH₃ at the front face of the SCR catalyst can be increased even with low space velocities.

According to an embodiment, said step of modifying the NH₃-refilling process includes enhancing a NH₃ storage target for the ammonia (NH₃) being stored in said SCR catalyst to its maximum value. In normal operation, the NH₃ storage target is a function of temperature, decreasing with the increasing temperatures. Whereas in conventional approaches the storage target is usually set to be lower than the maximum amount of NH₃ that can be stored before NH₃ slip would occur (in order to prevent an undesired NH₃ slip if the temperature suddenly increases), in the above concept according to the afore-mentioned embodiment of the invention, the NH₃ storage target is set to the maximum level if e.g. the engine is about to be switched off, since the afore-mentioned safety margin does not have to be observed anymore.

According to an embodiment, the step of modifying the NH₃-refilling process includes continuing the injection of ammonia (NH₃) or urea for a lag time beyond a stop of the engine. With other words, the engine and the SCR system are not shut down immediately, but allow a time lag for continued urea/ammonia injection.

According to an embodiment, at least one indicator for an anticipated interruption of NH₃ refilling can e.g. be obtained (without the invention being limited thereto) from driver activities (e.g. "key off', gear selection or park/neutral for automatic transmission etc.), the navigation system (which may e.g. indicate that the vehicle approaches or almost reached the target destination), the parking system and/or sensors (e.g. if they are activated) or periods of idle operation.

According to an embodiment, said step of modifying the NH₃-refilling process includes injecting ammonia (NH₃) or urea in a pulsed operation. Accordingly, the dosing strategy is adapted once an imminent or impending engine stop is determined.

In particular, quickly refilling the SCR catalyst e.g. at cold start or at key-off can be performed using one or more pulses of urea injection, which represent high levels of the ratio between ammonia (NH₃) and nitrogen oxide (NOₓ). This ratio is also defined as α and is given in units of ppm. The enhancement of the ratio α allows to obtain higher NOₓ-conversions at lower temperatures if compared to NOₓ-conversions obtained at a stoichiometric continuous dosing (with a ratio of α =1).

The invention also relates to a device for controlling the operation of an exhaust aftertreatment system in a vehicle, wherein said device is configured to perform a method according to the present invention as described above.

Further configurations of the invention are to be found in the description and the appendant claims. The invention is described in greater detail hereinafter by means of embodiments by way of example illustrated in the accompanying drawings:

In the drawings:
- Figure 1: is a diagram showing a NH₃ storage change performed according to an embodiment of the present invention;
- Figure 2-3: are diagrams showing the effect of the inventive method on NOₓ-conversion according to embodiments of the invention that make use of pulsed urea injection; and
- Figure 4: showing a typical characteristic of NOₓ-conversion vs. NH₃-load.

According to the method of the invention, the prestored amount of ammonia (NH₃) in an SCR catalyst in an exhaust aftertreatment system in a vehicle is enhanced if it is forecasted that the standard dosing control routine and, hence, the refilling of the SCR catalyst with ammonia (NH₃), will be interrupted, for example if the engine is about to be switched off. Indicators for an anticipated interruption of NH₃ refilling can e.g. be obtained from driver activities (e.g. "key off', gear selection or park/neutral for automatic transmission etc.), the navigation system (which may e.g. indicate that the vehicle approaches or almost reached the target destination), the parking system and/or sensors (e.g. if they are activated) or periods of idle operation.

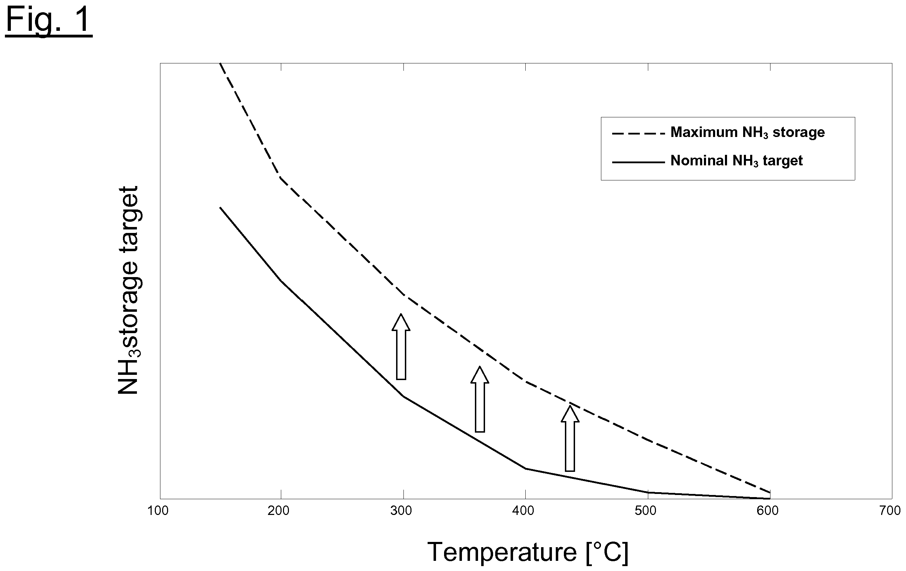

In particular, as illustrated in Fig. 1, the dosing strategy can be adapted once the imminent engine stop is determined. Normally the NH₃ storage target is a function of temperature, decreasing with the increasing temperatures. The storage target is set to be lower than the maximum amount of NH₃ that can be stored before NH₃ slip would occur. This is mainly to prevent NH₃ slip should the temperature increase suddenly. However, if the engine is about to be switched off, this safety margin does not have to be observed and the NH₃ storage target can be set to the maximum level.

In further embodiments, quickly refilling the catalyst at the cold start or if the engine is turned off (= "key-off') is performed with one or more pulses of urea injection representing high levels of the ratio between ammonia (NH₃) and nitrogen oxide (NOₓ). This ratio is defined as α and is given in units of ppm. The enhancement of the ratio α allows to obtain higher NOₓ-conversions at lower temperatures if compared to NOₓ-conversions obtained at stoichiometric continuous dosing (i.e. having a ratio of α=1).

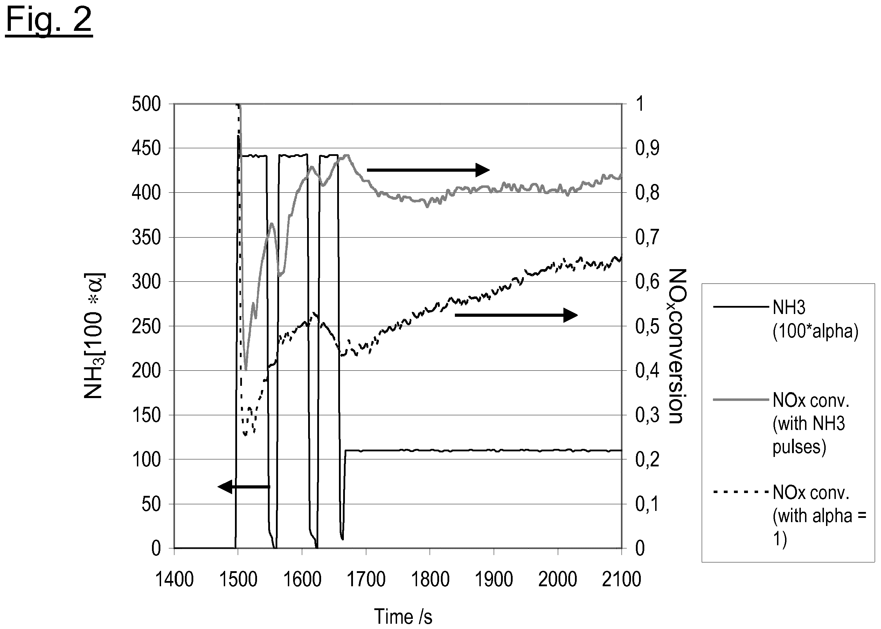

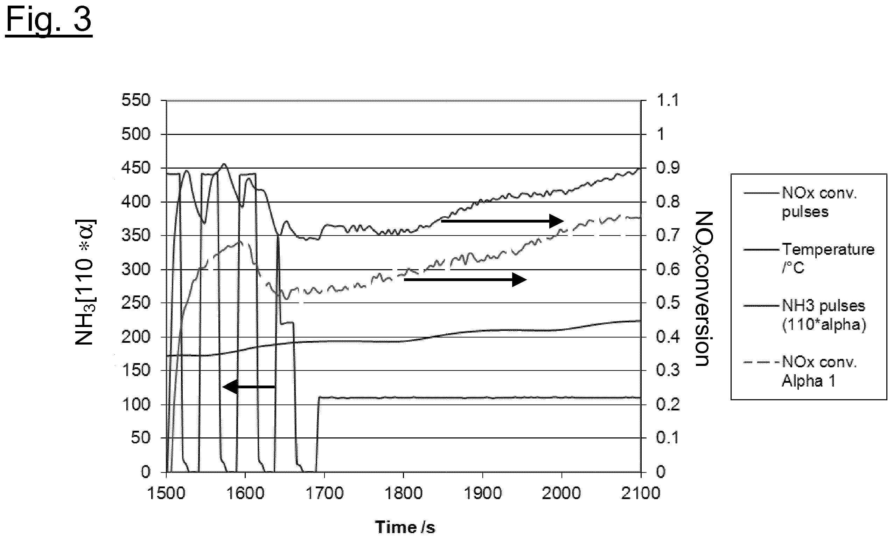

As illustrated in Fig. 2 and Fig. 3, studies made by the inventors that compare NOx conversion on different SCR catalysts being initially empty of ammonia (NH₃) with SCR catalysts that have already stored some ammonia (NH₃) on a previous cycle (pulse or pulses with high α) demonstrate that, while instantaneous NOₓ conversion on the cycle without any prestored NH₃ (without pulses only with a ratio of α=1) only starts with active injection of ammonia and, hence, relies on higher temperatures upstream of the catalyst, NOₓ conversion starts already well below the defined injection temperature if prestored ammonia (NH₃) is available.

Here, the SCR catalysts were tested in a laboratory-scale fixed-bed flow reactor made from a quartz tube. An electric furnace was used for the heating of the reactor. A core catalyst sample was inserted into a quartz tube wrapped with a matting material. The cores were equipped with two thermocouples inserted directly before and behind core sample. A conventional flow setup was used for gas mixture preparation. All gases were of ultra high purity. Humidifier was installed to provide precise water concentration in the gas line. The flow rates were controlled using commercial available mass flow controllers. To prevent water condensation, all connection lines were heated up to approximately 170°C. Reactor effluents were analysed with a twin Chemical Ionization MS from V&F, Austria.

As can be seen from Fig. 2, NOₓ conversion on clean Cu-SCR sample increased with initial NH₃ introduction as pulses representing overall α=3.0, compared to continuous run at low temperature with α=1.0. The further parameters for the measurements according to Fig. 2 were: Reaction temperature: 180 °C, reaction mixture: NOₓ = 300 ppm (25 % NO₂), O₂ = 10 %, H₂O = 10 %, balanced N₂, SV = 30 000 h-1; NH₃ = 2 pulses with α=4 (48 s NH₃ on and 16 s off, overall α=3.0) and 1 pulse 32 s NH₃ on than continue with α=1.

The enhancement of the ratio α allows to obtain higher NOₓ-conversions at lower temperatures if compared to NOₓ-conversions obtained at a stoichiometric continuous dosing (with a ratio of α=1).

The same trend in results was observed also in the results obtained for a Fe-SCR catalyst sample, as shown in Fig. 3. The further parameters for the measurements according to Fig. 3 were: Reaction temperature: 180 °C, reaction mixture: NOₓ = 300 ppm (25 % NO₂), O₂ = 10 %, H₂O = 10 %, balanced N₂, SV = 30 000 h-1; NH₃ = 3 pulses with α=4 (32 s NH₃ on and 32 s off, overall α=2.0) and 1 pulse with α=2 (32 s NH₃ on and 32 s off, overall α=1.0) than continue with α=1.

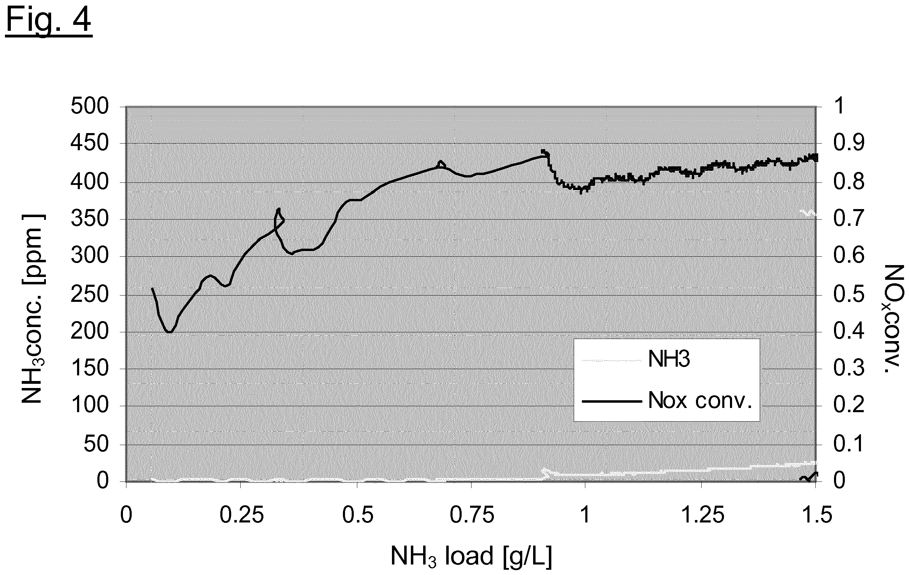

Fig. 4 is a diagram showing the NOₓ conversion vs. NH₃ load dependence. It can be seen that an initial increase of NH₃ load fill with high α pulses is beneficial for quickly reaching a maximal NOₓ conversion for optimal NH3 load fill and for avoiding NH₃ slip.

## Claims

1. A method for controlling the operation of an exhaust aftertreatment system in a vehicle, wherein said system comprises a SCR catalyst for reducing nitrogen oxides (NOₓ) in the exhaust gas of the engine based on a reaction between said nitrogen oxides (NOₓ) and ammonia (NH₃), and wherein a stored amount of ammonia (NH₃) being stored in said SCR catalyst is actively controlled by injection of ammonia (NH₃) or urea in a NH₃-refilling process,
said method comprises the following steps:
a) determining whether at least one indicator for an impending interruption of the NH₃-refilling process exists; and
b) modifying, depending on the result of step a), the NH₃-refilling process if said indicator exists, wherein said step b) includes increasing a prestored amount of ammonia (NH₃) in a state in which the engine is about to be stopped;
**characterized in that**
said step b) further includes continuing the injection of ammonia (NH₃) or urea for a lag time beyond a stop of the engine.

2. The method according to claim 1,
**characterized in that**
said step b) includes enhancing a NH₃ storage target for the ammonia (NH₃) being stored in said SCR catalyst to its maximum value.

3. The method according to claim 1 or 2,
**characterized in that**
said step b) includes injecting ammonia (NH₃) or urea in a pulsed operation.

4. The method according to anyone of the preceding claims,
**characterized in that**
said determining in step a) is performed based on activity of the driver of the vehicle.

5. The method according to anyone of the preceding claims,
**characterized in that**
said determining in step a) is performed based on an output of a navigation system in the vehicle.

6. The method according to anyone of the preceding claims,
**characterized in that**
said determining in step a) is performed based on operation of a parking system in the vehicle.

7. The method according to anyone of the preceding claims,
**characterized in that**
said determining in step a) is performed based on an idle operation of the vehicle.

8. A vehicle with exhaust gas aftertreatment system, wherein said system comprises a SCR catalyst for reducing nitrogen oxides (NOₓ) in the exhaust gas of the engine based on a reaction between said nitrogen oxides (NOₓ) and ammonia (NH₃), and wherein the vehicle is configure to actively control a stored amount of ammonia (NH₃) being stored in said SCR catalyst injection of ammonia (NH₃) or urea in a NH₃-refilling process,
**characterized in that**
the vehicle is configured to perform a method in accordance with anyone of the preceding claims.

## Patentansprüche

1. Verfahren zum Steuern des Betriebs eines Abgasnachbehandlungssystems in einem Fahrzeug, wobei das System einen SCR-Katalysator zum Verringern von Stickoxiden (NOₓ) im Abgas der Kraftmaschine auf der Basis einer Reaktion zwischen den Stickoxiden (NOₓ) und Ammoniak (NH₃) umfasst und wobei eine gespeicherte Menge Ammoniak (NH₃), die in dem SCR-Katalysator gespeichert ist, durch Einspritzen von Ammoniak (NH₃) oder Harnstoff in einem NH₃-Wiederauffüllprozess aktiv gesteuert wird,
wobei das Verfahren die folgenden Schritte umfasst:
a) Bestimmen, ob mindestens ein Kennzeichen für eine bevorstehende Unterbrechung des NH₃-Wiederauffüllprozesses vorhanden ist; und
b) abhängig vom Ergebnis von Schritt a), Modifizieren des NH₃-Wiederauffüllprozesses, wenn das Kennzeichen vorhanden ist, wobei der Schritt b) das Erhöhen einer vorab gespeicherten Menge Ammoniak (NH₃) in einem Zustand, in dem die Kraftmaschine gerade angehalten werden soll, enthält;
**dadurch gekennzeichnet, dass**
der Schritt b) ferner das Fortsetzen des Einspritzens von Ammoniak (NH₃) oder Harnstoff für eine Verzögerungszeit über ein Anhalten der Kraftmaschine hinaus enthält.

2. Verfahren nach Anspruch 1,
**dadurch gekennzeichnet, dass**
der Schritt b) das Erhöhen eines NH₃-Speicherziels für den Ammoniak (NH₃), der in dem SCR-Katalysator gespeichert ist, auf seinen Maximalwert enthält.

3. Verfahren nach Anspruch 1 oder 2,
**dadurch gekennzeichnet, dass**
der Schritt b) das Einspritzen von Ammoniak (NH₃) oder Harnstoff in einer gepulsten Betriebsweise enthält.

4. Verfahren nach einem der vorhergehenden Ansprüche,
**dadurch gekennzeichnet, dass**
das Bestimmen in Schritt a) auf der Basis der Aktivität des Fahrers des Fahrzeugs durchgeführt wird.

5. Verfahren nach einem der vorhergehenden Ansprüche,
**dadurch gekennzeichnet, dass**
das Bestimmen in Schritt a) auf der Basis eines Ausgangs eines Navigationssystems im Fahrzeug durchgeführt wird.

6. Verfahren nach einem der vorhergehenden Ansprüche,
**dadurch gekennzeichnet, dass**
das Bestimmen in Schritt a) auf der Basis des Betriebs eines Einparksystems im Fahrzeug durchgeführt wird.

7. Verfahren nach einem der vorhergehenden Ansprüche,
**dadurch gekennzeichnet, dass**
das Bestimmen in Schritt a) auf der Basis eines Leerlaufbetriebs des Fahrzeugs durchgeführt wird.

8. Fahrzeug mit einem Abgasnachbehandlungssystem, wobei das System einen SCR-Katalysator zum Verringern von Stickoxiden (NOₓ) im Abgas der Kraftmaschine auf der Basis einer Reaktion zwischen den Stickoxiden (NOₓ) und Ammoniak (NH₃) umfasst und wobei das Fahrzeug konfiguriert ist, eine gespeicherte Menge Ammoniak (NH₃), die in der SCR-Katalysatoreinspritzung gespeichert ist, von Ammoniak (NH₃) oder Harnstoff in einem NH₃-Wiederauffüllprozess aktiv zu steuern,
**dadurch gekennzeichnet, dass**
das Fahrzeug konfiguriert ist, ein Verfahren nach einem der vorhergehenden Ansprüche durchzuführen.

## Revendications

1. Procédé de contrôle du fonctionnement d'un système de post-traitement d'échappement dans un véhicule, dans lequel ledit système comprend un catalyseur RCS destiné à réduire les oxydes d'azote (NOₓ) dans le gaz d'échappement du moteur sur la base d'une réaction entre lesdits oxydes d'azote (NOₓ) et de l'ammoniac (NH₃), et dans lequel une quantité stockée d'ammoniac (NH₃) qui est stockée dans ledit catalyseur RCS est activement contrôlée par injection d'ammoniac (NH₃) ou d'urée dans un processus de recharge en NH₃,
ledit procédé comprenant les étapes suivantes :
a) déterminer s'il existe au moins un indicateur pour une interruption imminente du processus de recharge en NH₃ ; et
b) modifier, en fonction du résultat de l'étape a), le processus de recharge en NH₃ si ledit indicateur existe, ladite étape b) comportant l'augmentation d'une quantité préstockée d'ammoniac (NH₃) dans un état dans lequel le moteur est sur le point d'être arrêté ;
**caractérisé en ce que**
ladite étape b) comporte en outre la poursuite de l'injection d'ammoniac (NH₃) ou d'urée pendant un temps de latence au-delà d'un arrêt du moteur.

2. Procédé selon la revendication 1,
**caractérisé en ce que**
ladite étape b) comporte l'augmentation d'une cible de stockage de NH₃ pour l'ammoniac (NH₃) qui est stocké dans ledit catalyseur RCS jusqu'à sa valeur maximale.

3. Procédé selon la revendication 1 ou 2,
**caractérisé en ce que**
ladite étape b) comporte l'injection d'ammoniac (NH₃) ou d'urée dans un fonctionnement pulsé.

4. Procédé selon l'une quelconque des revendications précédentes,
**caractérisé en ce que**
ladite détermination à l'étape a) est effectuée sur la base de l'activité du conducteur du véhicule.

5. Procédé selon l'une quelconque des revendications précédentes,
**caractérisé en ce que**
ladite détermination à l'étape a) est effectuée sur la base d'une sortie d'un système de navigation dans le véhicule.

6. Procédé selon l'une quelconque des revendications précédentes,
**caractérisé en ce que**
ladite détermination à l'étape a) est effectuée sur la base du fonctionnement d'un système de parcage dans le véhicule.

7. Procédé selon l'une quelconque des revendications précédentes,
**caractérisé en ce que**
ladite détermination à l'étape a) est effectuée sur la base d'un fonctionnement au ralenti du véhicule.

8. Véhicule avec système de post-traitement de gaz d'échappement, ledit système comprenant un catalyseur RCS destiné à réduire les oxydes d'azote (NOₓ) dans le gaz d'échappement du moteur sur la base d'une réaction entre lesdits oxydes d'azote (NOₓ) et de l'ammoniac (NH₃), et le véhicule étant configuré pour contrôler activement une quantité stockée d'ammoniac (NH₃) qui est stockée dans ladite injection de catalyseur RCS d'ammoniac (NH₃) ou d'urée dans un processus de recharge en NH₃,
**caractérisé en ce que**
le véhicule est configuré pour effectuer un procédé selon l'une quelconque des revendications précédentes.
